# EUROPEAN PATENT APPLICATION

(11) **EP 3 954 472 A1**
(43) Date of publication of application: **16.02.2022**
(21) Application number: 20788256.4
(22) Date of filing: 10.04.2020
(51) Int. Cl.: B07B 1/38, B07B 1/42

(54) **OPERATION MONITORING SYSTEM FOR SIEVING DEVICE**

(30) Priority: 12.04.2019 JP 2019076336; 12.04.2019 JP 2019076424
(71) Applicant: Satake Corporation, Chiyoda-ku Tokyo 101-0021 (JP)
(72) Inventor: TAGAWA Sumio, Tokyo 101-0021 (JP); NOBUTO Shinpei, Tokyo 101-0021 (JP); KAWANO Shogo, Tokyo 101-0021 (JP)
(74) Representative: Haseltine Lake Kempner LLP
(86) International application number: PCT/JP2020/016125
(87) International publication number: WO 2020/209361

(57) **Abstract**

An operation monitoring system for a sifting device includes: movement state sensing means to be provided for a sieve frame of the sifting device that rotationally oscillates, and capable of sensing a movement state of the sieve frame; and operation monitoring means capable of monitoring an operation state of the sifting device based on measured data transmitted from the movement state sensing means. The operation monitoring means includes a measured data arithmetic processing unit that subjects the measured data to arithmetic processing, and a movement state display unit capable of displaying the movement state of the sieve frame based on arithmetic processing data obtained by the measured data arithmetic processing unit.

## Description

### [Technical Field]

The present invention relates to an operation monitoring system for a sifting device capable of determining an operation state of the sifting device.

### [Background Art]

Conventional sifting devices that subject granular materials to sifting processing include a plan sifter as described in Patent Literature 1. The plan sifter includes a sieve frame, and the sieve frame is installed in a building while being suspended with a plurality of rods in an oscillatable manner.

The plan sifter is provided with an eccentric shaft and an unbalanced weight substantially at a central part of the sieve frame. Then, when the plan sifter is operated, the eccentric shaft and the unbalanced weight rotate to cause the sieve frame to rotationally oscillate in the horizontal direction, so that sifting processing is performed. Moreover, when installing the plan sifter, adjustment or the like of the balanced weight is performed such that a turning radius of the sieve frame in accordance with rotational oscillation falls within a suitable range.

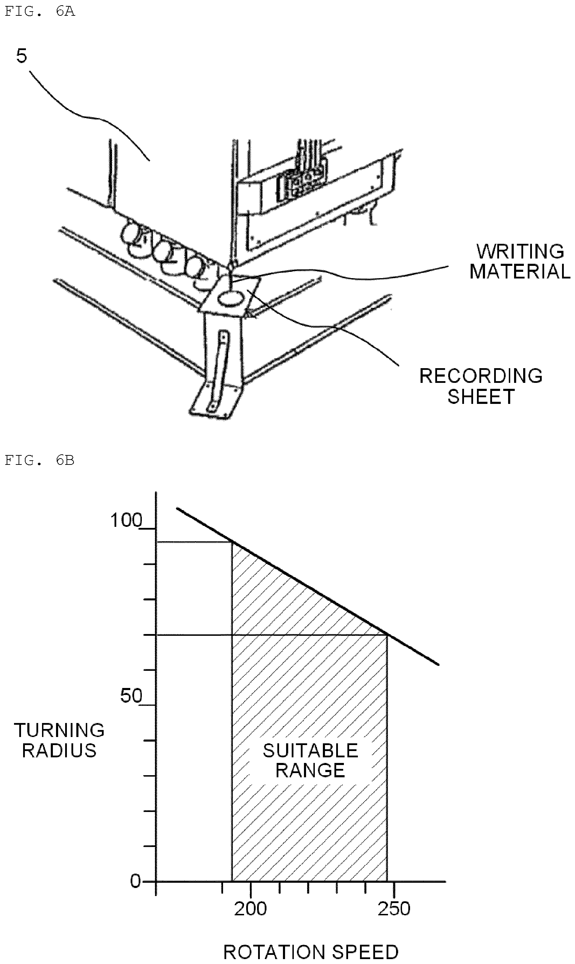

Then, in order to confirm whether the turning radius of the sieve frame falls within the suitable range, a writing material such as a marker or pencil is conventionally attached to a lower corner of the sieve frame 5 as shown in Figure 6A. Then, a recording sheet is set under the writing material to record rotation circles, and the diameter of the rotation circles is measured by a ruler or the like. Furthermore, a technique of checking the recording result of the rotation circles against a graph showing the size of a suitable circle with respect to a rotation speed as shown in Figure 6B to confirm whether the turning radius of the sieve frame 5 falls within the suitable range is employed.

Moreover, abrasion and degradation states of bearings located on the top and bottom of the above-described eccentric shaft are visually inspected by stopping the operation of the plan sifter and periodically demounting a bearing portion.

### [Citation List]

### [Patent Literature]

[Patent Literature 1] Japanese Patent Laid-Open No. 2001-104885

### [Summary of Invention]

### [Technical Problem]

However, the confirmation method as described above may not allow one to promptly recognize a case in which the flow rate or load of a granular material is changed during the operation of the plan sifter or an occurrence of any abnormal variation in the turning radius of the sieve frame based on an abnormality in a component of the plan sifter.

Then, continuation of the operation of the plan sifter in a state where the turning radius of the sieve frame falls out of the suitable range may cause a decrease in processing capability of a sieve, damage to a member, and rapid degradation of a member associated with overload.

Twenty minutes or more is required until rotational oscillation of the sieve frame is stabilized after the operation of the plan sifter is started. Moreover, whether the turning radius is stable within the suitable range depends on visual confirmation of the rotation circles recorded on the sheet. This may prolong adjustment with another facility.

Moreover, relatively minor state changes such as abrasion and degradation of components including rolling elements used for the bearing are difficult to sense by visual inspection. Thus, a method such as periodically replacing the bearing regardless of the extent of degradation state is adopted. Moreover, in this case, a component is replaced by a new one regardless of the degree of wearing of the component, which raises a problem in that unnecessary cost is required.

Furthermore, continuation of the running of the sifting device without periodically inspecting or replacing the bearing as described above results in such a situation that galling occurs during the operation and the running of the sifting device has to be stopped hastily.

Thus, in view of the above-described problems, the present invention has an object to provide an operation monitoring system for a sifting device capable of instantly sensing an abnormality in a sifting device such as a plan sifter during the operation, and capable of monitoring an operation state of the sifting device all the time. The present invention has another object to provide a bearing monitoring system for a sifting device capable of instantly sensing an abnormality in a bearing in a sifting device such as a plan sifter during the operation, and capable of monitoring a state of the bearing all the time.

### [Solution to Problem]

An invention according to claim 1 of the present application is an operation monitoring system for a sifting device, including: movement state sensing means to be provided for a sieve frame of the sifting device that rotationally oscillates, and capable of sensing a movement state of the sieve frame; and operation monitoring means capable of monitoring an operation state of the sifting device based on measured data transmitted from the movement state sensing means. The operation monitoring means includes a measured data arithmetic processing unit that subjects the measured data to arithmetic processing, and a movement state display unit capable of displaying the movement state of the sieve frame based on arithmetic processing data obtained by the measured data arithmetic processing unit.

An invention according to claim 2 of the present application is the operation monitoring system for the sifting device according to claim 1, in which the movement state sensing means at least includes an acceleration sensing unit capable of sensing a centrifugal acceleration in a circular motion of the sieve frame.

An invention according to claim 3 of the present application is the operation monitoring system for the sifting device according to claim 2, in which the movement state display unit of the operation monitoring means is capable of displaying a centrifugal displacement of the sieve frame based on the arithmetic processing data.

An invention according to claim 4 of the present application is the operation monitoring system for the sifting device according to claim 1, in which the movement state sensing means at least includes an angular velocity sensing unit capable of sensing an angular velocity of the sieve frame.

An invention according to claim 5 of the present application is the operation monitoring system for the sifting device according to claim 4, in which the movement state display unit of the operation monitoring means is capable of displaying an inclination status of the sieve frame based on the arithmetic processing data.

An invention according to claim 6 of the present application is the operation monitoring system for the sifting device according to claim 1, in which the movement state sensing means includes an acceleration sensing unit capable of sensing a centrifugal acceleration in a circular motion of the sieve frame, and an angular velocity sensing unit capable of sensing an angular velocity of the sieve frame.

An invention according to claim 7 of the present application is the operation monitoring system for the sifting device according to claim 6, in which the movement state display unit of the operation monitoring means is capable of displaying a centrifugal displacement of the sieve frame and an inclination status of the sieve frame based on the arithmetic processing data.

An invention according to claim 8 of the present application is the operation monitoring system for the sifting device according to any one of claims 2, 4, and 6, in which the operation monitoring means includes a state determination unit that compares at least one of a centrifugal displacement of the sieve frame and an inclination status of the sieve frame with a predetermined threshold value to determine an abnormality in the movement state of the sieve frame.

An invention according to claim 9 of the present application is a bearing monitoring system for the sifting device, including: a movement sensing unit provided in a bearing storage unit of a bearing that rotatably supports a shaft having an unbalanced weight in an oscillation device for a sifting device that rotationally oscillates, and capable of sensing a movement of the bearing storage unit; movement state monitoring means provided for a sieve frame of the sifting device, and capable of monitoring a movement state of the bearing stored in the bearing storage unit based on measured data sensed by the movement sensing unit; and state informing means for informing an abnormality in the bearing based on the movement state of the bearing transmitted from the movement state monitoring means.

An invention according to claim 10 of the present application is the bearing monitoring system for the sifting device according to claim 9, in which the movement sensing unit is composed of an orthogonal direction acceleration sensing unit capable of sensing an acceleration in a direction substantially orthogonal to a rotation axis of the bearing, and inputs the measured data sensed by the orthogonal direction acceleration sensing unit to the movement state monitoring means.

An invention according to claim 11 of the present application is the bearing monitoring system for the sifting device according to claim 9, in which the movement sensing unit is composed of an axial acceleration sensing unit capable of sensing an acceleration in a direction of a rotation axis of the bearing, and inputs the measured data sensed by the axial acceleration sensing unit to the movement state monitoring means.

An invention according to claim 12 of the present application is the bearing monitoring system for the sifting device according to claim 9, in which the movement sensing unit is composed of an orthogonal direction acceleration sensing unit capable of sensing an acceleration in a direction substantially orthogonal to a rotation axis of the bearing and an axial acceleration sensing unit capable of sensing an acceleration in a direction of the rotation axis of the bearing, and inputs the measured data sensed by the orthogonal direction acceleration sensing unit and the axial acceleration sensing unit to the movement state monitoring means.

An invention according to claim 13 of the present application is the bearing monitoring system for the sifting device according to any one of claims 10 to 12, in which the movement state monitoring means includes a measured data arithmetic processing unit that subjects the measured data as input to arithmetic processing, a state determination unit that determines a state of the bearing based on arithmetic processing data obtained by the measured data arithmetic processing unit, and a state transmission unit that transmits the state of the bearing determined by the state determination unit to the state informing means.

An invention according to claim 14 of the present application is the bearing monitoring system for the sifting device according to according to any one of claims 9 to 13, in which the state informing means includes display means capable of displaying at least one of a cause of an abnormality in the bearing and a handling method for the abnormality based on a movement state of the bearing.

### [Advantageous Effects of Invention]

In the invention according to claim 1, the movement state sensing means capable of sensing a movement state of the sieve frame of the sifting device that rotationally oscillates is provided for the sieve frame, and measured data is transmitted from the movement state sensing means to the operation monitoring means. Then, the control unit that functions as the measured data arithmetic processing unit of the operation monitoring means is configured such that display content concerning the movement state and the like of the sieve frame based on the received measured data on the sieve frame is displayed on the movement state display unit. Such a characteristic configuration of the present invention enables the operation monitoring device to monitor whether there is an abnormality in the operation state all the time including the start of operation of the sifting device and during the operation, and enables a decrease in processing capability of a sieve, damage to a member, and degradation of a member associated with an overload and the like to be prevented before they occur.

In the invention according to claim 2, furthermore, the movement state sensing means includes the acceleration sensing unit capable of sensing the centrifugal acceleration in the circular motion of the sieve frame. This enables the state of the circular motion of the sieve frame to be sensed with high accuracy.

In the invention according to claim 3, furthermore, the operation monitoring means is provided with the movement state display unit, and a centrifugal displacement of the sieve frame is displayed. This enables the movement state of the sieve frame to be easily grasped.

In the invention according to claim 4, furthermore, the movement state sensing means includes the angular velocity sensing unit capable of sensing an angular velocity of the sieve frame. This enables the inclination state of the sieve frame to be sensed with high accuracy.

In the invention according to claim 5, furthermore, the inclination status of the sieve frame is displayed on the movement state display unit of the operation monitoring means. This enables the inclination status of the sieve frame to be easily grasped.

In the invention according to claim 6, furthermore, the movement state sensing means includes the acceleration sensing unit capable of sensing the centrifugal acceleration in the circular motion of the sieve frame and the angular velocity sensing unit capable of sensing the angular velocity of the sieve frame. This enables the state of the circular motion of the sieve frame and the inclination state of the sieve frame to be sensed with high accuracy.

In the invention according to claim 7, furthermore, the movement state display unit of the operation monitoring means is configured such that the centrifugal displacement of the sieve frame and the inclination status of the sieve frame can be displayed based on the arithmetic processing data processed in the control unit. This enables the operation state of the sieve frame to be grasped at a glance.

In the invention according to claim 8, furthermore, the operation monitoring means includes the state determination unit that compares at least one of the centrifugal displacement of the sieve frame and the inclination status of the sieve frame with the predetermined threshold value to determine the abnormality in the movement state of the sieve frame. This enables the abnormality occurred in the sifting device to be grasped timely to take measures such as stopping the operation.

In the invention according to claim 9, the movement state of the bearing is monitored by the movement state monitoring means based on the measured data sensed by the movement sensing unit provided for the bearing storage unit, and the abnormality, if occurred, is informed immediately by the state informing means. This enables the state of the bearing to be recognized in real time, and enables a component of the bearing to be repaired or replaced at appropriate timing.

In the invention according to claim 10, furthermore, the orthogonal direction acceleration sensing unit capable of sensing the acceleration in the direction substantially orthogonal to the rotation axis of the bearing is provided as the movement sensing unit. This allows the acceleration in the direction on which the centrifugal force acts to be sensed, and enables minor vibration or the like produced based on the state of the bearing to be reliably sensed as an acceleration signal.

In the invention according to claim 11, furthermore, the axial acceleration sensing unit capable of sensing the acceleration in the direction of the rotation axis of the bearing is provided as the movement sensing unit. This enables only vibration and amplitude occurred when an abnormality occurs in the bearing to be effectively sensed as an acceleration signal while reducing the influence caused by the rotation of the sieve frame 5.

In the invention according to claim 12, furthermore, the orthogonal direction acceleration sensing unit capable of sensing the acceleration in the direction substantially orthogonal to the rotation axis of the bearing and the axial acceleration sensing unit capable of sensing the acceleration in the direction of the rotation axis of the bearing are provided as the movement sensing unit. This enables a more detailed state of the bearing to be sensed with high accuracy.

In the invention according to claim 13, furthermore, the movement state monitoring means is provided with the state determination unit that determines the state of the bearing based on input measured data, and is configured to transmit the state of the bearing determined by the state determination unit to the state informing means. This enables a person in charge who carries a tablet PC 93, a manager of an institution management system 92, or the like to grasp in real time the state of the bearing in detail, and enables a component of the bearing to be repaired or replaced at appropriate timing.

In the invention according to claim 14, furthermore, the state informing means causes at least one of the cause of the abnormality occurring in the bearing and the handling method for the abnormality to be displayed on the display means. This enables a person in charge or the like to easily grasp a more specific state of the bearing or handling method.

### [Brief Description of Drawings]

[Figure 1A] Figure 1A is a perspective view of a plan sifter to which an inertial sensor unit has been attached according to a first embodiment of the present invention.
[Figure 1B] Figure 1B is a perspective view of an operation monitoring device according to the first embodiment of the present invention.
[Figure 2A] Figure 2A is a device block diagram of the inertial sensor unit according to the first embodiment of the present invention.
[Figure 2B] Figure 2B is a device block diagram of the operation monitoring device according to the first embodiment of the present invention.
[Figure 3] Figure 3 is a front view of a monitor showing an example of a display mode of the operation monitoring device according to the first embodiment of the present invention.
[Figure 4] Figure 4 is a front view of a monitor showing an example of a display mode of the operation monitoring device according to the first embodiment of the present invention.
[Figure 5] Figure 5 is a device block diagram of an inertial sensor unit according to a second embodiment of the present invention.
[Figure 6A] Figure 6A is a perspective view of a conventional turning radius recording device that records rotational oscillation in a plan sifter.
[Figure 6B] Figure 6B is a confirmation sheet for a suitable oscillation range of the conventional turning radius recording device on which rotational oscillation in the plan sifter is recorded.
[Figure 7A] Figure 7A is a perspective view of a plan sifter to which a movement state monitoring unit has been attached according to a third embodiment of the present invention.
[Figure 7B] Figure 7B is a perspective view of a wireless LAN access point, an institution management system, and a tablet PC according to the third embodiment of the present invention.
[Figure 8] Figure 8 is a block diagram of the movement state monitoring unit according to the third embodiment of the present invention.
[Figure 9] Figure 9 is a perspective view showing a plan sifter to which a movement state monitoring unit has been attached, a wireless LAN access point, an institution management system, and a tablet PC according to another embodiment of the present invention.
[Figure 10] Figure 10 is a block diagram of the movement state monitoring unit according to the other embodiment of the present invention.
[Figure 11] Figure 11 is an abnormality determination flowchart according to the third embodiment of the present invention.
[Figure 12] Figure 12 is a diagram showing causes of an abnormality in an acceleration signal and countermeasures according to the third embodiment of the present invention.

### [Description of Embodiments]

Hereinafter, embodiments of an operation monitoring system for a plan sifter of the present invention will be described with reference to the drawings.

### [First embodiment]

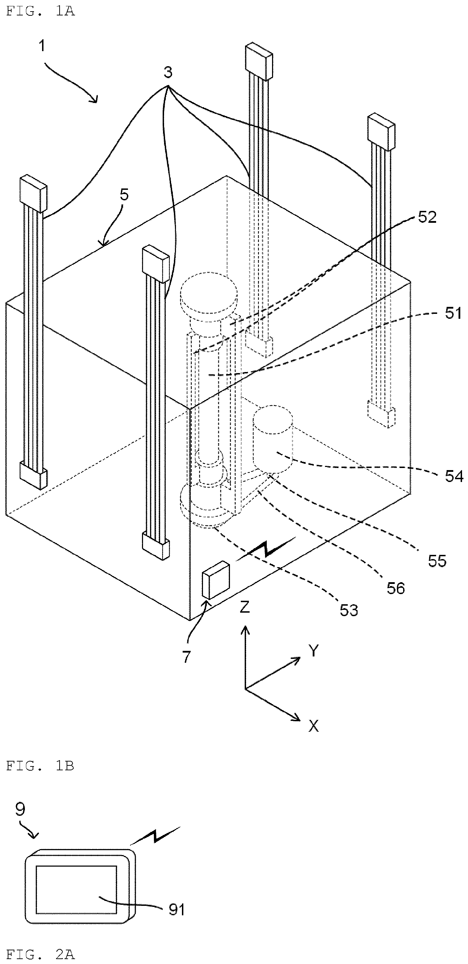

Hereinafter, a first embodiment according to the present invention will be described with reference to Figure 1A to Figure 4. As shown in the perspective view of Figure 1A, in a plan sifter 1 as a sifting device according to the present embodiment, a sieve frame 5 having a substantially cubic shape is suspended with four rods 3 from a beam or the like in a building in an oscillatable manner. A shaft 51 including an unbalanced weight 52 is provided substantially at the center in the sieve frame 5 with a rotation axis extending in the vertical direction.

A motor 54 is fixed at a lower part in the sieve frame 5 as shown in the drawing. A motor pulley 55 rotatably attached to the rotation shaft at a lower part of the motor 54 and a drive pulley 53 rotatably attached to a lower part of the shaft 51 are coupled with a belt 56. Then, with driving of the motor 54, the shaft 51 to which motive power from the motor 54 has been transmitted via a belt 56 rotates to cause the sieve frame 5 to rotationally oscillate in a centrifugal direction on the horizontal plane (the X-Y plane in Figure 1A).

### (Movement state sensing unit)

The sieve frame 5 according to the present embodiment is provided with a movement state sensing unit 7 as movement state sensing means in a mode shown in the drawing in the vicinity of a lower corner on the outer surface of the sieve frame 5. The movement state sensing unit 7 includes a sensor 70, and the sensor 70 is provided with a three-axis acceleration sensor 71 as an acceleration sensing unit and a three-axis gyroscope 72 as an angular velocity sensing unit. This allows an inclination status of the sieve frame 5 in a resting state, an inclination status of the sieve frame 5 in an operation state, rotations per minute, a centrifugal displacement, and the like to be computed and output by a CPU 711 and the like.

Figure 2A shows a block diagram of the movement state sensing unit 7 described above. As shown in the drawing, the movement state sensing unit 7 according to the present embodiment includes the sensor 70, the CPU 711, a real-time clock 712, a power supply circuit 713, a battery 714, an external power supply connector 715, a wireless communication module 731, a wired communication I/F 732, a wired communication connector 733, and the like. The sensor 70 includes the three-axis acceleration sensor 71 and the three-axis gyroscope 72.

Pieces of measured data measured by the three-axis acceleration sensor 71 and the three-axis gyroscope 72 are subjected to arithmetic processing by the CPU 711 that functions as a measured data arithmetic processing unit together with information from the real-time clock 712. Then, arithmetic processing data obtained by the arithmetic processing is transmitted in real time to the operation monitoring device 9 that functions as operation monitoring means via the wireless communication module 731 by general-purpose wireless communication means such as Bluetooth (registered trademark) or Wi-Fi (registered trademark). Such a configuration saves the effort of installing a communication line. Moreover, the operation state of the plan sifter 1 can be monitored at any place.

Note that the movement state sensing unit 7 according to the present embodiment also includes the wired communication I/F 732 in addition to the wireless communication module 731, as shown in Figure 2A. Therefore, measured data from the movement state sensing unit 7 can also be transmitted to the operation monitoring device 9 by wired communication via the wired communication connector 733.

Power feeding to the movement state sensing unit 7 according to the present embodiment is performed by the battery 714 connected to the power supply circuit 713. Such a configuration saves the effort of installing a power supply line. Moreover, the movement state sensing unit 7 can be installed in the sieve frame 5 without considering whether or not there is a power supply around an installation place.

Furthermore, the movement state sensing unit 7 according to the present embodiment also includes an external power supply connector 715 that can be fed with power from an external power supply. Thus, the power feeding method of either the battery 714 or the external power supply can be selected and used.

### (Operation monitoring device)

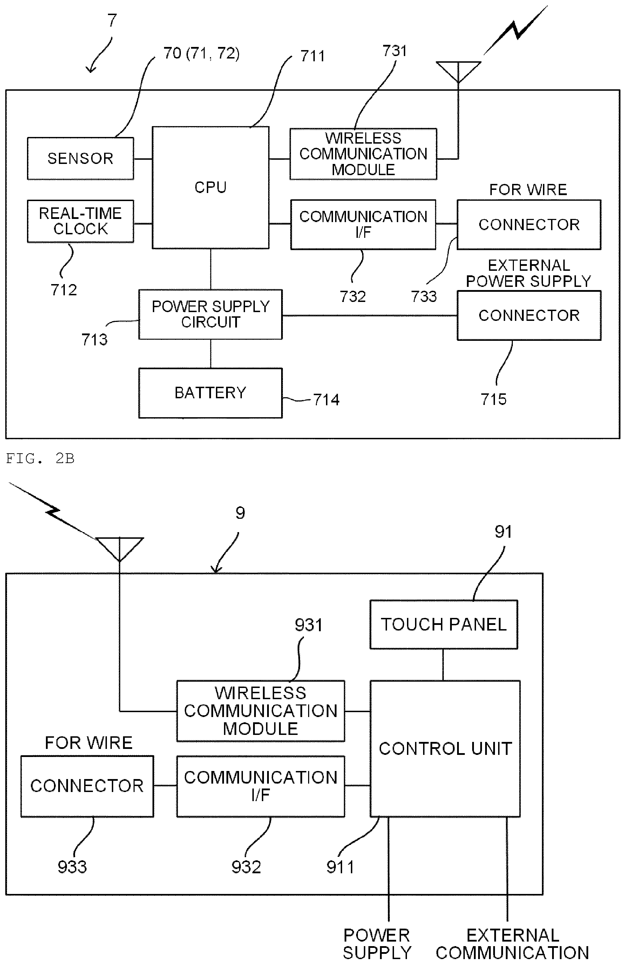

Figure 1B shows an overall perspective view of the operation monitoring device 9 according to the present embodiment, and Figure 2B shows a block diagram of the above-described operation monitoring device 9. As shown in the respective drawings, the operation monitoring device 9 according to the present embodiment is configured to be capable of monitoring the operation state of the plan sifter 1 based on the arithmetic processing data transmitted from the movement state sensing unit 7 via a touch panel 91.

As shown in Figure 2B, the operation monitoring device 9 according to the present embodiment includes the touch panel 91, a control unit 911, a wireless communication module 931, and the like. Then, it is configured such that the arithmetic processing data based on the movement state of the sieve frame 5 transmitted from the movement state sensing unit 7 is sent to the control unit 911 of the operation monitoring device 9 via the wireless communication module 931.

The control unit 911 performs analysis processing on the received arithmetic processing data based on the movement state of the sieve frame 5. Moreover, display content concerning the movement state of the sieve frame 5 and the like is displayed on a display screen having the touch panel 91 that functions as a movement state display unit. Note that a battery not shown can also be built in the operation monitoring device 9 so that an operation manager or the like of the plan sifter 1 can carry the operation monitoring device 9. The operation monitoring device 9 can also be attached to any place in the vicinity of the installation place of the plan sifter 1, a central management room of a facility, or the like.

Moreover, as shown in Figure 2B, the operation monitoring device 9 according to the present embodiment is provided with a wired communication I/F 932 similarly to the movement state sensing unit 7. The wired communication I/F 732 of the movement state sensing unit 7 and the wired communication I/F 932 of the operation monitoring device 9 can also be connected by wire to transmit/receive arithmetic processing data. Such a configuration enables reliable transmission/reception of the arithmetic processing data without being affected by a radio wave receiving environment or an installation place of the operation monitoring device 9.

Moreover, as to the operation monitoring device 9 according to the present embodiment, the operation monitoring device 9 can also be obtained by utilizing general-purpose communication equipment such as a PC, tablet terminal, or smartphone to be used for operation management for an institution or a facility besides a dedicated wireless communication terminal as shown in Figure 1B and Figure 2B, installing an operation monitoring application, and the like.

### (Method of monitoring operation of plan sifter)

An operation monitoring method for the plan sifter 1 according to the present embodiment will be described. In the present embodiment, as shown in the perspective view of Figure 1A, the movement state sensing unit 7 is installed in the sieve frame 5 in advance, and before the plan sifter 1 is operated, the sieve frame 5 is installed substantially horizontally while suspending the sieve frame 5 with the four rods 3.

When the sieve frame 5 is installed substantially horizontally and starts operating, arithmetic processing data is transmitted from the movement state sensing unit 7 to the operation monitoring device 9, and the operation state of the plan sifter 1 is monitored by the operation monitoring device 9.

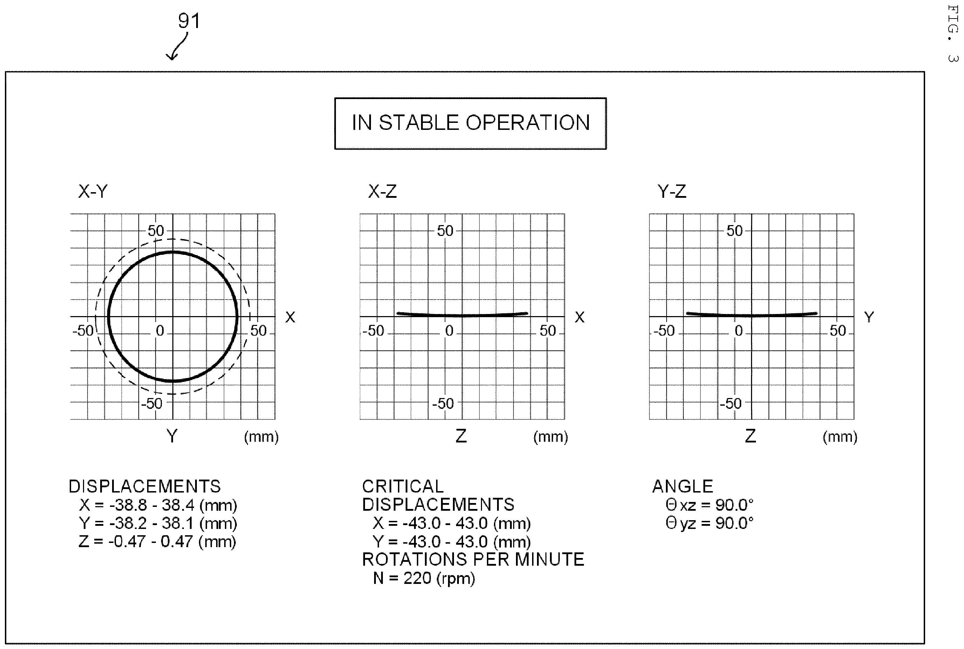

Figure 3 shows an example of a display mode in the operation monitoring device 9. Describing in detail, three Lissajous figures are displayed on a monitor screen, where displacements of the sieve frame 5 on the X-Y-Z coordinates shown in Figure 1A are displayed. In other words, a current status of the circular motion of the sieve frame 5 is displayed in the X-Y Lissajous figure on the left end by a thick solid line, and the displacements are displayed together under the X-Y Lissajous figure as [X = -38.8 to 38.4 mm], [Y = -38.2 to 38.1 mm], and [Z = -0.47 to 0.47 mm]. Then, the display of these Lissajous figures and displacements is configured to be updated and displayed in real time.

In the X-Y Lissajous figure, critical displacements indicated by a broken line are displayed as shown in the drawing. Moreover, [X = -43.0 to 43.0 mm] and [Y = -43.0 to 43.0 mm] are displayed as critical displacements at rotations per minute of [N = 220 rpm] at the right lower side of the X-Y Lissajous figure. Note that, since the critical displacements vary according to the rotations per minute of the sieve frame 5, it is configured such that current rotations per minute is displayed in real time, and the critical displacements are also updated and displayed all the time.

Furthermore, the Y-Z Lissajous figure showing a displacement of the sieve frame 5 on the Y-Z coordinate and the X-Z Lissajous figure showing a displacement of the sieve frame 5 on the X-Z coordinate are displayed on the right side of the X-Y Lissajous figure. It is thereby configured such that displacements of the sieve frame 5 in the vertical direction (the Z-axis) can be grasped in real time. Note that in the example shown in Figure 3, the solid lines in the Lissajous figures indicate that there is no significant displacement in the Z-axis direction. Moreover, [θxz = 90.0°] and [θyz = 90.0°] indicating that displacements along the Z-axis and in the X-axis direction and the Y-axis direction are an angle of 90 degrees are displayed under the Lissajous figures. Such a display mode enables the movement state of the sieve frame 5 to be easily determined.

As shown in Figure 3, a display region in which the operation state of the plan sifter 1 is displayed is provided at an upper part of the display screen of the touch panel 91 of the operation monitoring device 9. In the display region, a display such as "IN STABLE OPERATION" indicating that the movement state of the sieve frame 5 falls within a suitable range is provided.

In a case where displacements of the sieve frame 5 and critical displacements to be threshold values are compared to be determined that the sensed displacements fall out of the suitable range, the operation monitoring device 9 according to the present embodiment changes the display of the operation state from "IN STABLE OPERATION" to "ABNORMAL OPERATION SENSED", and gives a warning. Note that at this time the operation monitoring device 9 may be provided with a speaker to produce an alarm sound. Such a configuration enables an abnormal change in the operation state to be grasped more quickly.

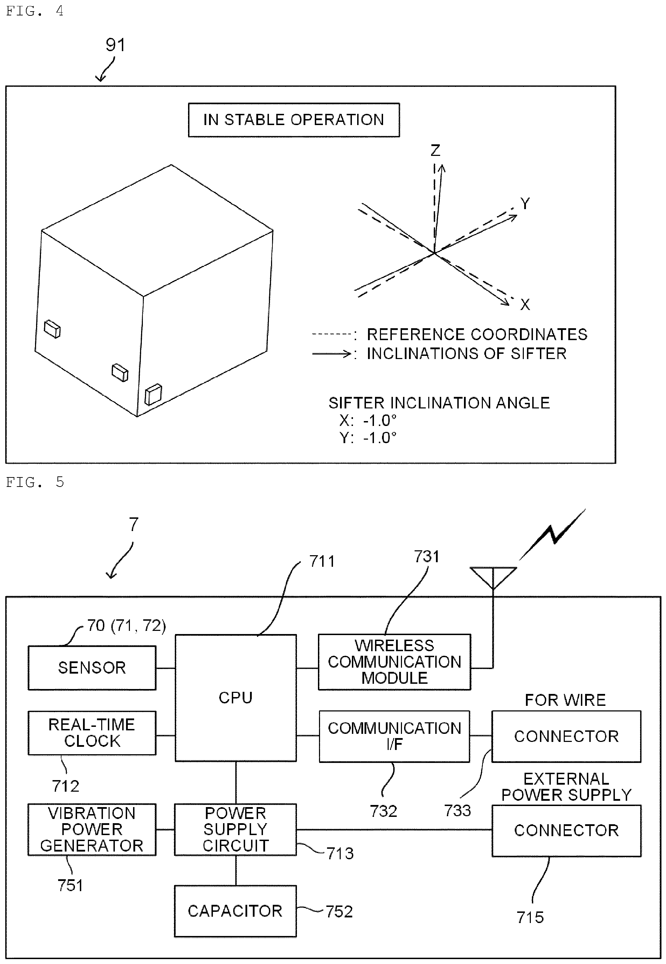

Figure 4 shows a display mode of an attitude state of the sieve frame 5 in the operation monitoring device 9. An image representing the sieve frame 5 having a three-dimensional shape is displayed on the left side on the monitor screen, and the inclination status of the sieve frame 5 based on the measured data of the movement state sensing unit 7 can be updated and displayed in real time.

A display region for displaying an image representing a three-dimensional vector diagram is provided on the right side of the monitor screen, as shown in Figure 4. In the display region, an inclination status with respect to the X-Y-Z-axes based on the measured data of the movement state sensing unit 7 is updated and displayed in real time by the three-dimensional vector diagram. An inclination angle from a normal state is displayed under the three-dimensional vector diagram, and in the example shown in Figure 4, the current inclination angle of the sieve frame 5 is displayed as [X: -1.0°] and [Y: -1.0°].

A state display such as "IN STABLE OPERATION" is also provided on the monitor screen shown in Figure 4 similarly to the display mode in Figure 3. In a case where the inclination angle of the sieve frame 5 exceeds an allowable threshold value, a change is made to a state display such as "ABNORMAL OPERATION SENSED". Moreover, notification by an alarm sound can also be performed together.

The first embodiment of the present invention has been described above. The operation state of the sieve frame 5 can be grasped in real time from the start to termination of operation of the plan sifter 1. This enables a significant failure, accident, and the like from being prevented before they happen, and enables machines and instruments to be adjusted or replaced at appropriate timing, which can significantly reduce maintenance cost of the plan sifter 1.

Moreover, the aforementioned conventional technology requires a space for attaching a measuring instrument at the lower corner of the sieve frame 5, and furthermore, the movement state of the sieve frame 5 can be confirmed only at the location. The present invention enables the movement state of the sieve frame 5 to be sensed wherever in the sieve frame 5 the movement state sensing unit 7 is attached, and the attachment location is not restricted.

Moreover, the conventional technology may not enable rotation circles to be recorded on a recording sheet in a case where the sieve frame 5 is inclined during the operation since a writing material is attached at the lower corner of the sieve frame 5, whereas the present invention enables the movement state to be monitored more reliably and more accurately than in the conventional technology since the movement state of the sieve frame 5 is sensed without using any writing material or the like.

### [Second embodiment]

Hereinafter, a second embodiment according to the present invention will be described based on a device block diagram of the movement state sensing unit 7 shown in Figure 5. Note that components similar to those of the aforementioned first embodiment will not be described.

In the first embodiment, the battery 714 is arranged as the power supply for the movement state sensing unit 7. Herein, since a secondary battery requires charging, the movement state sensing unit 7 cannot be used continuously unless being replaced at appropriate timing by another battery 714 having been charged, or being charged by an adapter or the like connected to the battery 714. This raises a problem in that the plan sifter 1 cannot be operated when replacing or charging the battery 714.

Thus, the second embodiment uses a vibration power generator 751 and a capacitor 752 instead of the battery 714, as shown in Figure 5. The vibration power generator 751 can generate power by the rotational movement of the sieve frame 5, and the generated power can be stored in the capacitor 752 via the power supply circuit 713. Then, the power stored in the capacitor 752 is fed as the power supply for the movement state sensing unit 7 via the power supply circuit 713. Therefore, the work of charging the battery 714 can prevent the operation of the plan sifter 1 from being restricted, and enables the operation state of the plan sifter 1 to be monitored all the time.

### [Third embodiment]

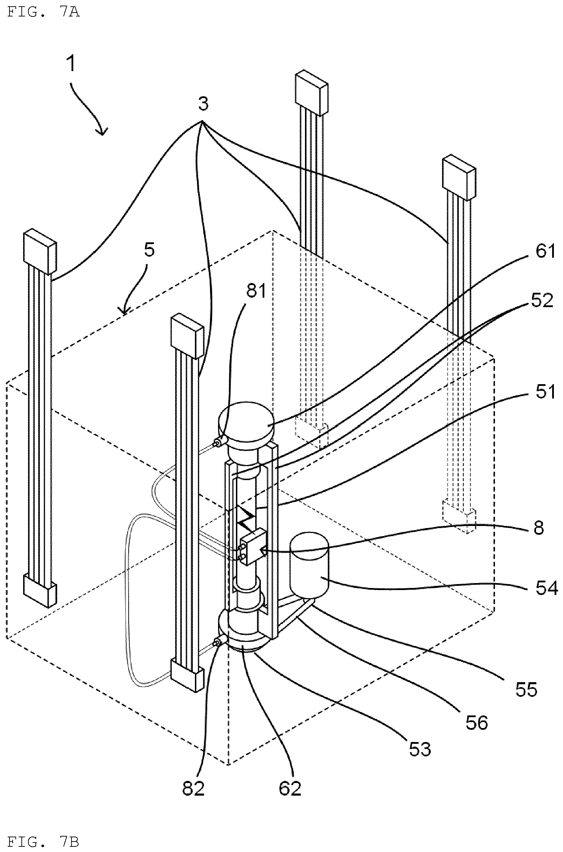

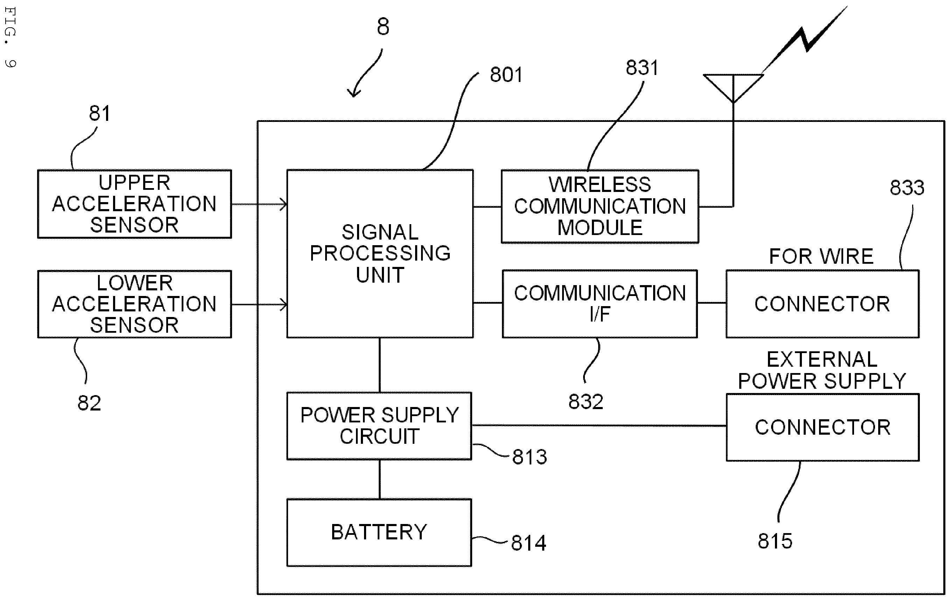

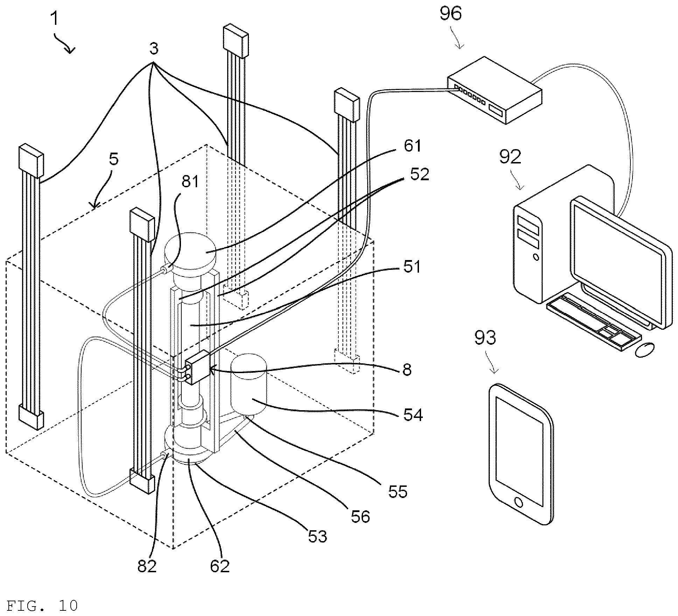

Hereinafter, a third embodiment according to the present invention will be described with reference to Figure 7A to Figure 10. As shown in the perspective view of Figure 7A, in the plan sifter 1 which is a sifting device according to the present embodiment, the sieve frame 5 having a substantially cubic shape is provided while being suspended with the four rods 3 from a beam or the like in a building in an oscillatable manner. Moreover, the shaft 51 including the unbalanced weight 52 is provided substantially at the center in the sieve frame 5 with the rotation axis extending in the vertical direction.

The motor 54 is fixed at the lower part in the sieve frame 5 as shown in the drawing. The motor pulley 55 rotatably attached to the rotation shaft at the lower part of the motor 54 and the drive pulley 53 rotatably attached to the lower part of the shaft 51 are coupled with the belt 56 to be configured as an oscillation device. Then, the unbalanced weight 52 of the shaft 51 to which motive power from the motor 54 has been transmitted via the belt 56 rotates with driving of the motor 54 to cause the sieve frame 5 to rotationally oscillate in the horizontal direction.

An upper bearing case 61 and a lower bearing case 62 are provided at an upper part and a lower part of the sieve frame 5 so as to rotatably support the upper end and lower end of the shaft 51 to which the unbalanced weight 52 is rotatably attached. The upper bearing case 61 and the lower bearing case 62 function as bearing storage units that store bearings.

Then, an upper acceleration sensor 81 and a lower acceleration sensor 82 are attached respectively to columnar sidewalls of the upper bearing case 61 and the lower bearing case 62. The upper acceleration sensor 81 and the lower acceleration sensor 82 are provided so as to have sensitivity axes being orthogonal to the rotation axes of the shaft 51, and function as movement sensing units. Such a configuration enables vibration or the like produced based on the state of the bearings to be effectively sensed as an acceleration signal via the upper bearing case 61 and the lower bearing case 62 during the operation of the plan sifter 1.

### (Movement state monitoring unit)

The sieve frame 5 according to the present embodiment is provided with a movement state monitoring unit 8 that functions as movement state monitoring means in a mode shown in the drawing in the vicinity of a corner at the upper part on the outer surface of the sieve frame 5. The movement state monitoring unit 8 is connected to the upper acceleration sensor 81 and the lower acceleration sensor 82 via wire cables.

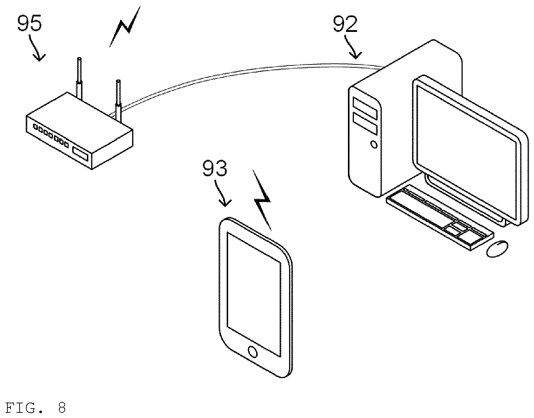

Figure 8 shows a block diagram of the movement state monitoring unit 8. As shown in the drawing, in the movement state monitoring unit 8 according to the present embodiment, pieces of measured data sensed in the upper acceleration sensor 81 and the lower acceleration sensor 82 are input to a signal processing unit 801 that functions as a measured data arithmetic processing unit via wire cables. Furthermore, the movement state monitoring unit 8 includes a power supply circuit 813, a battery 814, an external power supply connector 815, a wireless communication module 831, a wired communication I/F 832, a wired communication connector 833, and the like.

Describing in more detail, acceleration signals which are pieces of measured data sensed by the upper acceleration sensor 81 and the lower acceleration sensor 82 are input to the signal processing unit 801, and subjected to arithmetic processing as will be described later, so that bearing state determination is performed. In other words, the signal processing unit 801 also functions as a bearing state determination unit. Then, arithmetic processing data which is result data on the above-described state determination is transmitted in real time to an institution management system 92 via the wireless communication module 831 that functions as a state transmission unit. The arithmetic processing data is transmitted to the institution management system 92 via a tablet PC 93 and a wireless LAN access point 95 arranged externally (see Figure 7(b) and the like) by general-purpose wireless communication means such as Bluetooth (registered trademark) or Wi-Fi (registered trademark).

Such a configuration saves the effort of installing a communication line, and enables the state of the bearings in the sifting device to be monitored in real time at any place such as an operational management room of an operating institution, for example.

Note that the movement state monitoring unit 8 according to the present embodiment includes the wired communication I/F 832 in addition to the wireless communication module 831 as shown in the block diagram of Figure 8. Therefore, the state of the bearings can also be transmitted to the institution management system 92 or the like via the wired communication connector 833 by wired communication.

Moreover, power feeding to the movement state monitoring unit 8 according to the present embodiment is performed by a battery 814 connected to the power supply circuit 813. This saves the effort of installing a power supply line. This enables the movement state monitoring unit 8 to be installed in the sieve frame 5 without performing a work of installing a power supply line around the installation place.

Furthermore, the movement state monitoring unit 8 according to the present embodiment also includes an external power supply connector 815 that can be fed with power from an external power supply. This enables the power feeding method of either the battery 814 or the external power supply to be selected and used.

### (State determination method through use of acceleration signals)

A bearing state determination method through use of acceleration signals according to the present embodiment will be described.

When the shaft 51 to which motive power from the motor 54 has been transmitted starts eccentric rotation at the start of operation of the plan sifter 1, vibration and the like produced based on the state of the bearings are sensed as acceleration signals by the upper acceleration sensor 81 and the lower acceleration sensor 82. The acceleration signals are sensed via the upper bearing case 61 and the lower bearing case 62, and input to the signal processing unit 801 of the movement state monitoring unit 8.

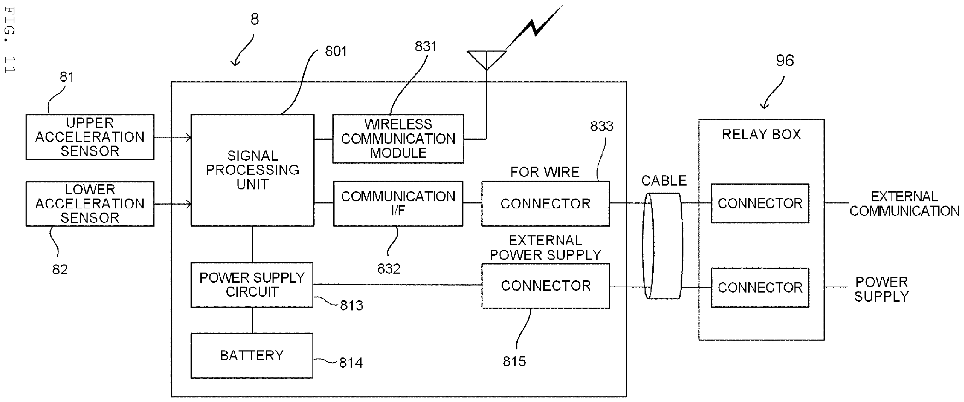

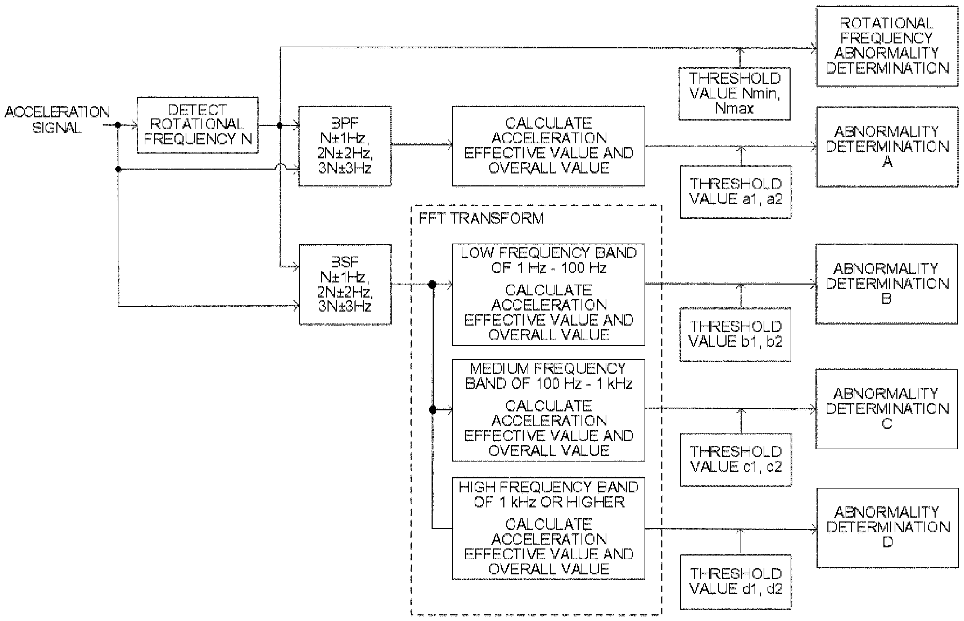

As shown in an abnormality determination flowchart in the signal processing unit 801 in Figure 11, a rotational frequency N at the upper bearing case 61 and the lower bearing case 62 is calculated from the input acceleration signals. Then, the calculated rotational frequency N is subjected to abnormality determination for the rotational frequency N using predetermined threshold values (a threshold value Nmin and a threshold value Nmax).

In a case where the calculated rotational frequency N falls below the threshold value Nmin, it is predicted that the shaft 51 is not rotating or is eccentrically rotating at an extremely low rotation speed for some reason. Thus, information on [warning] that requires immediately stopping the operation and performing an inspection is transmitted to the institution management system 92 and the tablet PC 93 via the wireless communication module 831. When transmitting the information on [warning], the institution management system 92 is notified of the occurrence of an abnormality, and a command that displays an instruction to instantly stop the operation of the plan sifter 1 is transmitted to the tablet PC 93.

On the other hand, in a case where the calculated rotational frequency N exceeds the threshold value Nmax, it is predicted that the shaft 51 is eccentrically rotating at an abnormal rotation speed for some reason. Thus, information on [warning] that requires immediately stopping the operation and performing an inspection is transmitted to the institution management system 92 and the tablet PC 93 via the wireless communication module 831. When transmitting the information on [warning], the institution management system 92 is notified of the occurrence of an abnormality, and a command that displays an instruction to instantly stop the operation of the plan sifter 1 is transmitted to the tablet PC 93.

Moreover, in the present embodiment, FFT transform is performed using a bandpass filter (BPF) and a band-stop filter (BSF) to perform determinations from an abnormality determination A to an abnormality determination D for respective detected frequency bands, as shown in the abnormality determination flowchart in Figure 11.

In a case where determination results in the abnormality determination A to the abnormality determination D are abnormal, an operation manager or the like is informed of respective predicted causes of abnormalities and handling methods for the abnormalities by the tablet PC 93 or the like. A method of each determination processing will be described below.

### (Abnormality determination A)

In the abnormality determination A, signals with the rotational frequency N multiplied by one, two, and three are subjected to processing of attenuating bands other than a predetermined band using a bandpass filter, and acceleration effective values are added up to calculate a value of the abnormality determination A. In a case where this value of the abnormality determination value A is more than or equal to a threshold value a1 and less than a threshold value a2, "caution" is transmitted, and in a case of being more than or equal to the threshold value a2, an alarm of "warning" is transmitted, to the institution management system 92 and the tablet PC 93 via the wireless communication module 831. When transmitting the information on [caution] or [warning], the institution management system 92 is notified of the occurrence of an abnormality, and a command displaying a cause and a handling method is transmitted to the tablet PC 93.

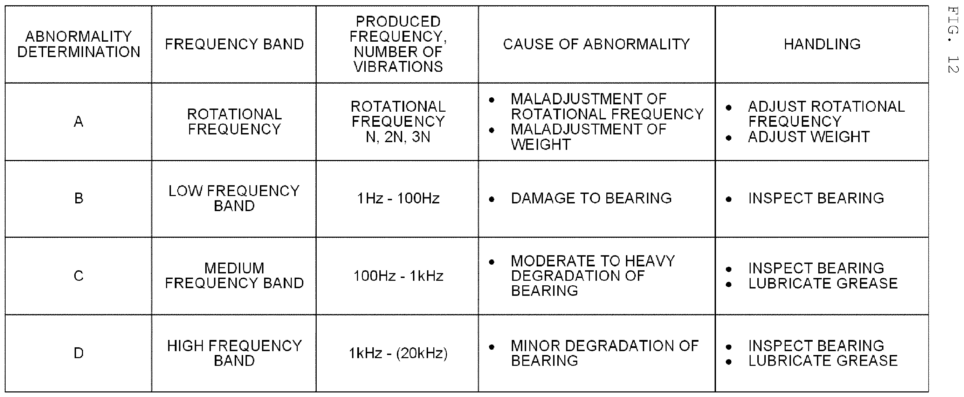

In a case where the determination result of the above-described abnormality determination A is determined as abnormal, the cause of the abnormality is determined as [maladjustment of rotational frequency] or [maladjustment of weight] as shown in an abnormality cause and handling table in Figure 12. Then, it is configured such that a display is performed on the tablet PC 93 showing that the handling method is [adjust rotational frequency] or [adjust weight].

### (Abnormality determination B)

In the abnormality determination B, signals with the rotational frequency N multiplied by one, two, and three are subjected to processing of removing a predetermined band using a band-stop filter, and an overall value of a low-range frequency band (1 Hz to 100 Hz) calculated by FFT transform is calculated. Then, in a case where the calculated value of the abnormality determination B is more than or equal to a threshold value b1 and less than a threshold value b2, "caution" is transmitted, and in a case of being more than or equal to the threshold value b2, the alarm of "warning" is transmitted, to the institution management system 92 and the tablet PC 93 via the wireless communication module 831. When transmitting the information on [caution] or [warning], the institution management system 92 is notified of the occurrence of an abnormality, and a command displaying a cause and a handling method is transmitted to the tablet PC 93. Note that the command displaying a cause and a handling method may also be transmitted to the institution management system 92, and the tablet PC 93 may be informed of the occurrence of the abnormality at the same time.

In a case where the determination result of the above-described abnormality determination B is determined as abnormal, the cause of the abnormality is determined as [damage to bearing] as shown in the abnormality cause and handling table in Figure 12. Then, it is configured such that a display is performed on the tablet PC 93 showing that the handling method is [inspect bearing].

### (Abnormality determination C)

In the abnormality determination C, signals with the rotational frequency N multiplied by one, two, and three are subjected to processing of removing a predetermined band using a band-stop filter, and an overall value of a medium frequency band (100 Hz to 1 kHz) calculated by FFT transform is calculated. Then, in a case where the calculated value of the abnormality determination C is more than or equal to a threshold value c1 and less than a threshold value c2, "caution" is transmitted, and in a case of being more than or equal to the threshold value c2, the alarm of "warning" is transmitted, to the institution management system 92 and the tablet PC 93 via the wireless communication module 831. When transmitting the information on [caution] or [warning], the institution management system 92 is notified of the occurrence of an abnormality, and a command displaying a cause and a handling method is transmitted to the tablet PC 93.

In a case where the determination result of the above-described abnormality determination C is determined as abnormal, the cause of the abnormality is determined as [moderate to heavy degradation of bearing] as shown in the abnormality cause and handling table in Figure 12. Then, it is configured such that a display is performed on the tablet PC 93 showing that the handling method is [inspect bearing/lubricate grease].

### (Abnormality determination D)

In the abnormality determination D, signals with the rotational frequency N multiplied by one, two, and three are subjected to processing of removing a predetermined band using a band-stop filter, and an overall value of a high frequency band (1 kHz or higher) calculated by FFT transform is calculated. Then, in a case where the calculated value of the abnormality determination D is more than or equal to a threshold value d1 and less than a threshold value d2, "caution" is transmitted, and in a case of being more than or equal to the threshold value d2, the alarm of "warning" is transmitted, to the institution management system 92 and the tablet PC 93 via the wireless communication module 831. When transmitting the information on [caution] or [warning], the institution management system 92 is notified of the occurrence of an abnormality, and a command displaying a cause and a handling method is transmitted to the tablet PC 93.

In a case where the determination result of the above-described abnormality determination D is determined as abnormal, the cause of the abnormality is determined as [minor degradation of bearing] as shown in the abnormality cause and handling table in Figure 12. Then, it is configured such that a display is performed on the tablet PC 93 showing that the handling method is [inspect bearing/lubricate grease].

Note that in the present embodiment, a case where it is determined as "caution" in all of the abnormality determinations A to D is set as a level that requires inspection within about one month, and a case where it is determined as "warning" is set as a level that requires immediate stopping and inspection of the machine. The threshold values used in the abnormality determinations can be set as appropriate according to necessity.

As described above, the present invention enables immediate notification of the result of a determination about an abnormality since the state of the bearings is monitored in real time, and furthermore, it is configured such that a cause of the abnormality and a handling method are displayed on the tablet PC 93 or the like. This enables grasping of the abnormality and handling to be performed in a short time without being affected greatly by empirical values of an operation manager or operator.

### [Other embodiments]

The operation monitoring system for the plan sifter 1 of the present invention is not necessarily limited to each of the aforementioned embodiments, and also includes those described below, for example.

For example, each of the aforementioned embodiments is configured such that the movement state sensing unit 7 is installed in the sieve frame 5 in advance, and is provided horizontally to the ground, but is not necessarily limited to such a configuration. The movement state sensing unit 7 may be attached later to the sieve frame 5, or may be provided in a replaceable manner as appropriate. Moreover, on that occasion, it is not necessarily required to attach the movement state sensing unit 7 horizontally to the ground. For example, it can be configured such that the movement state sensing unit 7 is provided with a reset switch or the like, and after installing the movement state sensing unit 7 in the sieve frame 5 whose installation has been completed, an initial attitude of the sieve frame 5 to be used as a reference is set as an initial position by the reset switch or the like. By providing such a function, the effort of installing the movement state sensing unit 7 can be reduced significantly.

Moreover, the movement state sensing unit 7 can also be installed with the interposition of a member such as an attachment jig, rather than being directly installed in the sieve frame 5. Such a configuration enables measurement by the movement state sensing unit 7 provided at a position apart from the sieve frame 5. This reduces an influence caused by vibrations produced by the shaft 51 and the motor 54 in the operation state of the plan sifter 1, and furthermore, enables displacements of the sieve frame 5 to be grasped with higher accuracy.

In addition to the three-axis acceleration sensor 71 and the three-axis gyroscope 72 provided in the movement state sensing unit 7, single-axis acceleration sensors may be provided respectively at the four corners of the sieve frame 5 such that sensitivity axes of the sensors extend in the vertical direction. Such a configuration enables a displacement of the sieve frame 5 in the vertical axis direction to be grasped in more detail. Note that, as to the attachment positions, the above-described single-axis acceleration sensors may be provided respectively at engaged portions between the sieve frame 5 and the rods 3, rather than at the four corners of the sieve frame 5. This enables displacement states of the four rods 3 to be grasped individually.

Moreover, instead of the above-described single-axis acceleration sensors provided respectively at the four corners of the sieve frame 5 or at the engaged portions of the rods 3, a three-axis acceleration sensor or a combination of a three-axis acceleration sensor and a three-axis gyroscope may be provided. Such a configuration enables correct displacements of the sieve frame 5 to be grasped by a plurality of other sensors even in a case where the three-axis acceleration sensor 71 or the three-axis gyroscope 72 provided in the movement state sensing unit 7 fails.

Moreover, in each of the aforementioned embodiments, the three-axis acceleration sensor 71 and the three-axis gyroscope 72 are provided in the movement state sensing unit 7. However, merely for sensing the state of a rotary motion, an acceleration sensor having a sensitivity axis extending in the X-axis direction and an acceleration sensor having a sensitivity axis extending in the Y-axis direction can also be provided to monitor the state of the rotary motion.

Moreover, as the power supply for the movement state sensing unit 7, power may be fed from the power supply of the motor 54. Such a configuration eliminates the need to perform charging or replacement of the battery 714, a work of installing a power supply line, or the like, and enables the operation status of the plan sifter 1 to be monitored all the time.

Moreover, the movement state sensing unit 7 may be provided with a speaker and a light emitting device. Such a configuration can let an operator in the vicinity who does not carry the touch panel 91 know an abnormal change with an alarm sound or a warning lamp in a case where a displacement of the sieve frame 5 falls out of the suitable range, which enables quick handling.

Moreover, the aforementioned embodiments have given examples in which the operation monitoring device 9 is provided in the vicinity of the plan sifter 1, or carried by an operation manager, but are not necessarily limited to these configurations. For example, it can also be configured such that the operation monitoring device 9 for a plurality of the plan sifters 1 is installed at a place such as an operation control room to enable simultaneous monitoring of operation statuses. Such a configuration enables monitoring of operation statuses of the plurality of plan sifters 1 with few people.

Moreover, it can also be configured such that the operation of the plan sifter 1 is automatically stopped when an abnormality occurs in accordance with a monitoring status in the operation monitoring device 9.

Moreover, although the movement state sensing unit 7 is installed at the lower corner of the sieve frame 5 in the aforementioned embodiments, providing the movement state sensing unit 7 at another place is not necessarily disallowed. The movement state sensing unit 7 can be installed at any place in the sieve frame 5. However, in order to grasp a displacement of the sieve frame 5 with high accuracy for grasping the operation status of the plan sifter 1, it is desirable to install the movement state sensing unit 7 at the lower corner of the sieve frame 5.

Moreover, each of the above embodiments has been described using embodiments in what is called a plan sifter as examples, but the present invention is not necessarily limited to the plan sifter. The present invention can be applied to anything in which a sieve frame is rotationally oscillated.

Moreover, the respective embodiments described above can be combined as appropriate to configure the operation monitoring system for a sifting device according to the present invention.

Moreover, the scope of the present invention is not only defined by the description of the above-described embodiments but also by the claims, and furthermore, any modification within the meaning and scope equivalent to the claims is included. Moreover, specific numeric ranges, device dimensions, shapes, functions, and the like described in each of the above-described embodiments can be modified in the range for solving the problems of the present invention.

The aforementioned third embodiment transmits determination result data from the movement state monitoring unit 8 by a general-purpose wireless communication system using the wireless communication module 831 as communication means. Moreover, in the third embodiment, the battery 814 is arranged in the movement state monitoring unit 8 as the power supply. However, such a configuration is not necessarily a limitation, and as shown in Figure 3 and Figure 4, for example, transmission of determination result data and power supply can also be performed by a wired communication system and a wired power feeding system via a relay box 96 using the wired communication I/F 832 and the wired communication connector 833.

Such a configuration allows a cause of an abnormality and a handling method in the determination result data transmitted from the signal processing unit 801 to be sent to the tablet PC 93 by a wireless communication system. Moreover, a determination result is sent from the wired communication I/F 832 to the institution management system 92 via the wired communication connector 833 and the relay box 96 by a wired communication system. This enables the determination result data to be reliably transmitted to the institution management system 92 without being affected by any radio wave communication failure in an institution.

Moreover, the external power supply connector 815 can also be fed with power from an external power supply via the relay box 96 and a cable. Such a configuration prevents the operation of the plan sifter 1 from being restricted by the work of replacing or charging the battery 814, and enables the operation status of the plan sifter 1 to be monitored all the time.

Moreover, a function of automatically stopping the operation of the plan sifter 1 based on a result of the abnormality determination can also be added to the movement state monitoring unit 8 or the institution management system 92. Moreover, a warning operation in conjunction with an alarm sound or alarm lamp can also be performed.

In the third embodiment, the upper acceleration sensor 81 and the lower acceleration sensor 82 are respectively attached to the columnar sidewalls of the upper bearing case 61 and the lower bearing case 62 such that the sensitivity axes of the upper acceleration sensor 81 and the lower acceleration sensor 82 are oriented to be orthogonal to the rotation axis of the shaft 51, but such a configuration is not necessarily a limitation. The sensitivity axes of the upper acceleration sensor 81 and the lower acceleration sensor 82 may be provided so as to match the direction of the rotation axis of the shaft 51. Such a configuration enables sensing of only vibration and amplitude in the vertical direction produced when an abnormality in the bearings occurs in the upper bearing case 61 and the lower bearing case 62 during the operation. This enables the influence caused by the rotation of the sieve frame 5 to be reduced to effectively sense the vibration and amplitude as an acceleration signal. It is obviously possible to attach an acceleration sensor to each of the sidewall and upper wall of the upper bearing case 61 and the sidewall and upper wall of the lower bearing case 62. Such a configuration enables sensing accuracy to be improved.

Moreover, the state of the bearings can be sensed even if only either the upper acceleration sensor 81 or the lower acceleration sensor 82 is provided. When providing either one of them, the lower acceleration sensor 82 should only be provided in correspondence to the lower bearing that is relatively more susceptible to abrasion.

Moreover, the respective embodiments described above can be combined as appropriate to configure the bearing monitoring system for the sifting device of the present invention.

Moreover, the scope of the present invention is not only defined by the description of the above-described embodiments but also by the claims, and furthermore, any modification within the meaning and scope equivalent to the claims is included. Moreover, specific numeric ranges, device dimensions, shapes, functions, and the like described in each of the above-described embodiments can be modified in the range for solving the problems of the present invention.

### [Reference Signs List]

- 1: plan sifter
- 3: rod
- 5: sieve frame
- 7: movement state sensing unit
- 8: movement state monitoring unit
- 9: operation monitoring device
- 51: shaft
- 52: unbalanced weight
- 53: drive pulley
- 54: motor
- 55: motor pulley
- 56: belt
- 70: sensor
- 71: three-axis acceleration sensor
- 72: three-axis gyroscope
- 91: touch panel
- 711: CPU
- 712: real-time clock
- 713: power supply circuit
- 714: battery
- 715: external power supply connector
- 731: wireless communication module
- 732: wired communication I/F
- 733: wired communication connector
- 751: vibration power generator
- 752: capacitor
- 911: control unit
- 931: wireless communication module
- 932: wired communication I/F
- 933: wired communication connector
- 61: upper bearing case
- 62: lower bearing case
- 81: upper acceleration sensor
- 82: lower acceleration sensor
- 92: institution management system
- 93: tablet PC
- 95: wireless LAN access point
- 96: relay box
- 813: power supply circuit
- 814: battery
- 815: external power supply connector
- 831: wireless communication module
- 832: wired communication I/F
- 833: wired communication connector
- 801: signal processing unit

## Claims

1. An operation monitoring system for a sifting device, comprising:
movement state sensing means to be provided for a sieve frame of the sifting device that rotationally oscillates, and capable of sensing a movement state of the sieve frame; and
operation monitoring means capable of monitoring an operation state of the sifting device based on measured data transmitted from the movement state sensing means, wherein
the operation monitoring means includes
a measured data arithmetic processing unit that subjects the measured data to arithmetic processing, and
a movement state display unit capable of displaying the movement state of the sieve frame based on arithmetic processing data obtained by the measured data arithmetic processing unit.

2. The operation monitoring system for the sifting device according to claim 1, wherein
the movement state sensing means at least includes an acceleration sensing unit capable of sensing a centrifugal acceleration in a circular motion of the sieve frame.

3. The operation monitoring system for the sifting device according to claim 2, wherein
the movement state display unit of the operation monitoring means is capable of displaying a centrifugal displacement of the sieve frame based on the arithmetic processing data.

4. The operation monitoring system for the sifting device according to claim 1, wherein
the movement state sensing means at least includes an angular velocity sensing unit capable of sensing an angular velocity of the sieve frame.

5. The operation monitoring system for the sifting device according to claim 4, wherein
the movement state display unit of the operation monitoring means is capable of displaying an inclination status of the sieve frame based on the arithmetic processing data.

6. The operation monitoring system for the sifting device according to claim 1, wherein
the movement state sensing means includes
an acceleration sensing unit capable of sensing a centrifugal acceleration in a circular motion of the sieve frame, and
an angular velocity sensing unit capable of sensing an angular velocity of the sieve frame.

7. The operation monitoring system for the sifting device according to claim 6, wherein
the movement state display unit of the operation monitoring means is capable of displaying a centrifugal displacement of the sieve frame and an inclination status of the sieve frame based on the arithmetic processing data.

8. The operation monitoring system for the sifting device according to any one of claims 2, 4, and 6, wherein
the operation monitoring means includes a state determination unit that compares at least one of a centrifugal displacement of the sieve frame and an inclination status of the sieve frame with a predetermined threshold value to determine an abnormality in the movement state of the sieve frame.

9. A bearing monitoring system for the sifting device, comprising:
a movement sensing unit provided in a bearing storage unit of a bearing that rotatably supports a shaft having an unbalanced weight in an oscillation device for a sifting device that rotationally oscillates, and capable of sensing a movement of the bearing storage unit;
movement state monitoring means provided for a sieve frame of the sifting device, and capable of monitoring a movement state of the bearing stored in the bearing storage unit based on measured data sensed by the movement sensing unit; and
state informing means for informing an abnormality in the bearing based on the movement state of the bearing transmitted from the movement state monitoring means.

10. The bearing monitoring system for the sifting device according to claim 9, wherein
the movement sensing unit is composed of an orthogonal direction acceleration sensing unit capable of sensing an acceleration in a direction substantially orthogonal to a rotation axis of the bearing, and inputs the measured data sensed by the orthogonal direction acceleration sensing unit to the movement state monitoring means.

11. The bearing monitoring system for the sifting device according to claim 9, wherein
the movement sensing unit is composed of an axial acceleration sensing unit capable of sensing an acceleration in a direction of a rotation axis of the bearing, and inputs the measured data sensed by the axial acceleration sensing unit to the movement state monitoring means.

12. The bearing monitoring system for the sifting device according to claim 9, wherein
the movement sensing unit is composed of an orthogonal direction acceleration sensing unit capable of sensing an acceleration in a direction substantially orthogonal to a rotation axis of the bearing and an axial acceleration sensing unit capable of sensing an acceleration in a direction of the rotation axis of the bearing, and inputs the measured data sensed by the orthogonal direction acceleration sensing unit and the axial acceleration sensing unit to the movement state monitoring means.

13. The bearing monitoring system for the sifting device according to any one of claims 10 to 12, wherein
the movement state monitoring means includes
a measured data arithmetic processing unit that subjects the measured data as input to arithmetic processing,
a state determination unit that determines a state of the bearing based on arithmetic processing data obtained by the measured data arithmetic processing unit, and
a state transmission unit that transmits the state of the bearing determined by the state determination unit to the state informing means.

14. The bearing monitoring system for the sifting device according to any one of claims 9 to 13, wherein
the state informing means includes display means capable of displaying at least one of a cause of an abnormality in the bearing and a handling method for the abnormality based on a movement state of the bearing.
